# FASCICULE DE BREVET EUROPEEN

(11) **EP 1 921 938 B1**
(45) Date de publication et mention de la délivrance du brevet: **16.06.2010**
(21) Numéro de dépôt: 06808085.2
(22) Date de dépôt: 07.09.2006
(51) Int. Cl.: A42B 3/30

(54) **DISPOSITIFS PERMETTANT L APPLICATION D UN DISPOSITIF COMMUNICANT D OSTEOPHONIE DANS UN MATERIEL PORTE PAR UN ETRE VIVANT**
VORRICHTUNGEN ZUR ANWENDUNG EINES KOMMUNIKATIONSGERÄTS MIT KNOCHENLEITUNGSHÖRER FÜR EINE VON EINEM LEBENWESEN GETRAGENE AUSRÜSTUNG
DEVICES FOR APPLYING AN OSTEOPHONIC COMMUNICATING APPARATUS IN AN EQUIPMENT WORN BY A LIVING BEING

(30) Priorité: 07.09.2005 FR 0509113
(43) Date de publication de la demande: 21.05.2008
(73) Titulaire: Newsteo (SAS), 83270 Saint Cyr sur Mer (FR)
(72) Inventeur: Przysiek, Franck, 83270 St Cyr sur Mer (FR); David, Jean-Marc, 83270 St Cyr sur Mer (FR)
(74) Mandataire: Roman, Alexis
(86) Numéro de dépôt international: PCT/FR2006/002059
(87) Numéro de publication internationale: WO 2007/028899

(56) Documents cités:
- WO-A-2004/023914
- US-A- 3 787 641
- US-A- 4 520 238
- US-A1- 2003 083 112
- US-A1- 2004 261 158

## Description

La présente invention concerne des procédés d'implantation et de maintien d'un dispositif communicant d'ostéophonie dans un matériel porté par un être vivant.

Le domaine de l'ostéophonie concerne la transmission d'ondes sonores par les os des êtres vivants. Ce phénomène permet, grâce à un ostéo-transducteur, de capter les sons émis par les cordes vocales de l'être vivant pour une fonction d'ostéo-microphonie et d'émettre des sons vers l'oreille interne de l'être vivant pour une fonction d'ostéophonie.

L'avantage de l'ostéo-microphone est qu'il peut ne capter, lorsqu'il est bien mis en oeuvre, que les sons émis par le sujet porteur du dispositif et non les bruits extérieurs. De même un ostéo-phone peut permettre au sujet porteur du dispositif d'être le seul à entendre le son émis.

Ce type d'invention trouve particulièrement son application dans les dispositifs de communication vocale de type microphone et/ou écouteur placés dans un matériel porté par un être vivant lui permettant d'avoir ses mains et ses mouvements libres.

En outre une mise en oeuvre rigoureuse permet une parfaite étanchéité du dispositif permettant une utilisation en milieu aquatique ou en atmosphère déflagrante.

De nombreux brevets protègent des dispositifs permettant de placer l'ostéo-transducteur au niveau de la tête du sujet équipé.

En particulier le brevet JP1146497 décrit un procédé d'intégration dans un casque de protection individuelle d'une bande élastique qui plaque les dispositifs d'ostéo-microphonie au niveau du haut de la nuque du sujet équipé.

Le brevet FR2722370 présente un dispositif de type cagoule en sangles comportant un ostéo-microphone retenu au sommet du crâne et des écouteurs face aux oreilles pour équiper un être humain sous un casque de protection individuelle.

Le brevet JP63097088 décrit un procédé d'intégration dans un casque de protection individuelle d'un dispositif comportant un ostéo-transducteur fixé au sommet de la face interne du casque

Le brevet US005083320 quant à lui présente un procédé d'ajustement de taille de casque par un dispositif constitué de poches d'air placées dans le casque et dont on ajuste la pression à l'aide d'une pompe et d'une valve accessibles de l'extérieur du casque et manoeuvrées à la main.

Le brevet WO 2004/023914 décrit un dispositif comportant un ostéomicrophone fixé de la face interne d'un casque de protection au niveau du haut de la nuque du sujet équipé.

Notre invention a pour but de contrer plusieurs inconvénients des brevets protégeant des procédés d'application d'ostéotransducteurs sur le crâne d'un sujet porteur d'un casque de protection individuelle.

En effet, les brevets existant appliquent l'ostéo-transducteur soit par le simple fait qu'ils sont fixés dans le casque, soit par une sangle venant s'ajouter à l'intérieur du casque, soit encore en ajoutant un dispositif de maintien supplémentaire (cagoule de sangle).

Par ce biais, les sons collectés par la structure rigide ou souple du casque lui-même peuvent se propager vers l'ostéo-microphone, qui les capture alors, ce qui vient annuler l'intérêt de l'ostéo-microphonie qui est sensée privilégier la capture exclusive des sons émis par le sujet porteur du dispositif d'ostéo-microphonie.

De même les procédés d'application existant risquent de placer l'ostéo-transducteur de façon inefficace, inconfortable, voire dangereuse avec un effet de poinçon en cas de choc sur le casque ou un pivotement de l'ostéo-transducteur sur sa sangle.

Notre invention propose une façon originale et innovante de corriger ces problèmes en fixant l'ostéo-transducteur sur une paroi semi-rigide qui atténue les conductions de sons provenant de la structure du matériel porté, et maintenue en pression par une poche appliquée contre la peau du sujet.

Le point d'application de l'ostéo-transducteur pourra se placer sur n'importe quelle partie du corps humain, sachant que l'efficacité de l'ostéo-transducteur est maximale à proximité de l'oreille interne et plus généralement sur le crâne selon les sujets. On pourra ainsi opter selon les possibilités et les contraintes des applications pour le front, le sommet du crâne, le menton, la nuque, les tempes, les pommettes, mais aussi les parties du tronc comme le long de la colonne vertébrale par exemple.

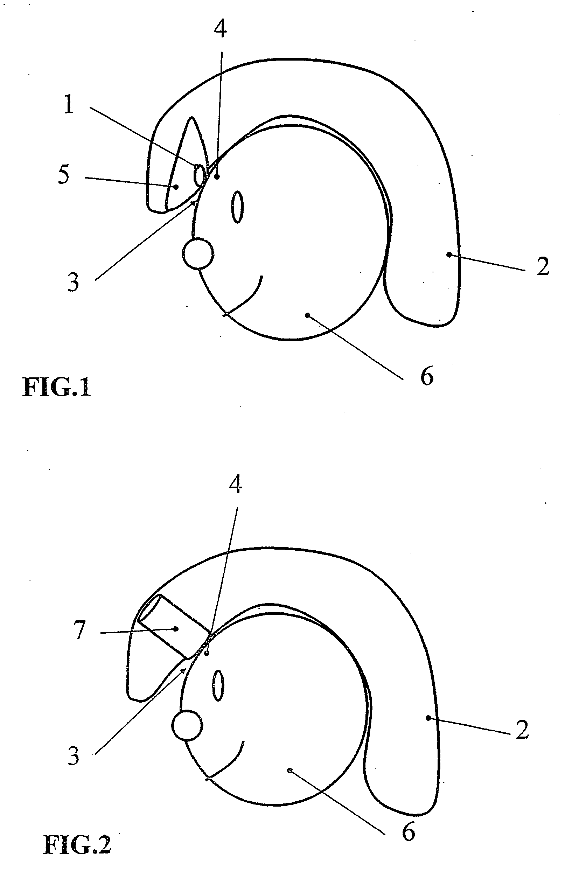

Selon un mode particulier de réalisation du procédé selon l'invention, illustré par la figure 1, le dispositif d'ostéophonie (1) est collé à l'intérieur d'une poche souple (5), placée sur ou à l'intérieur d'un casque (2) dans un espace réservé dans son épaisseur ou en superstructure, et servant à plaquer et à maintenir, de façon confortable et au plus prêt de l'os conducteur (4), comme par exemple sur le front, ledit dispositif d'ostéophonie (1) au travers de la membrane (5) sur la peau ou le cuir chevelu (3) d'un être vivant (6) portant ledit casque (2).

Dans ce premier cas, la poche (5) est hermétique et en légère surpression pour garantir une application optimale pour un utilisateur standard.

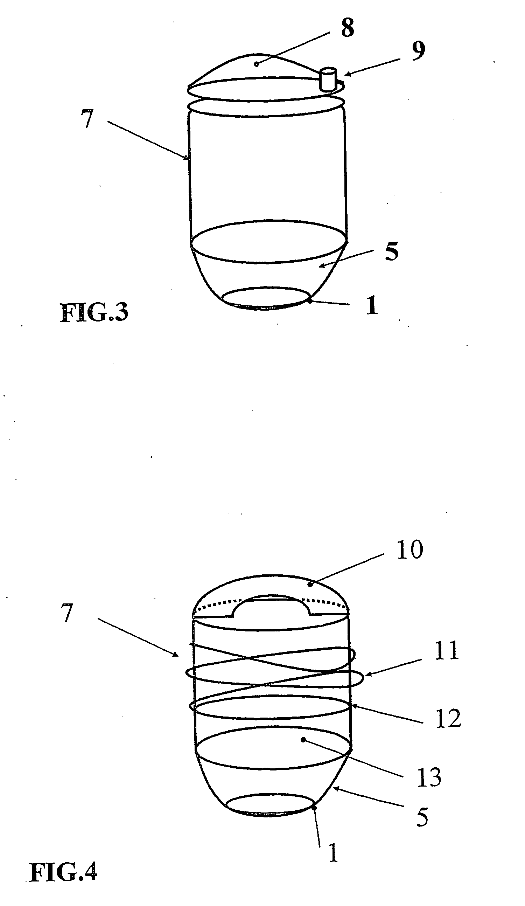

Selon un autre mode particulier de réalisation du procédé selon l'invention, illustré par les figure 2 et 3, la poche souple de maintien (5) dudit dispositif d'ostéo-phonie (1), est positionnée à l'extrémité d'une pièce mécanique additionnelle (7), laquelle est introduite dans la casque (2) en pratiquant un évidement qui est le négatif de la forme de la pièce mécanique (7) dans l'épaisseur dudit casque (2).

Cette pièce, de forme cylindrique à titre d'exemple non limitatif, pourra être fixée dans l'épaisseur du casque (2) de sorte que la membrane (5) affleure la surface interne du casque et que l'ostéo-transducteur (1) s'applique naturellement sur le crâne du sujet (6). Un dispositif de pompe (8) actionnée depuis l'extérieur du casque (2) permettrait d'augmenter la pression de la cavité réalisée par la pièce mécanique (7) et ainsi de plaquer plus fortement la paroi (5) et donc l'ostéo-transducteur (1) contre le crâne (6) du sujet. A contrario, une valve (9) permettrait de vider tout ou partie de l'air contenu dans la cavité réalisée par la pièce mécanique (7) afin de diminuer la force de placage de la paroi (5) et donc l'ostéo-transducteur (1) contre le crâne (6) du sujet. L'utilisateur (6) peut ainsi trouver le réglage optimal pour l'efficacité et le confort d'utilisation de son appareil.

Selon un autre mode particulier de réalisation du procédé selon l'invention, illustré par la figure 4, la forme (7) comporte cette fois non pas une pompe, mais un pas de vis (11) lui permettant une translation hélicoïdale dans son logement cylindrique réalisé dans l'épaisseur du casque (2). Une manette (10) permettrait à l'utilisateur de visser et dévisser le dispositif complet pour en ajuster le serrage contre le front (3) du crâne de l'utilisateur (6) et ainsi mettre en pression la membrane (5) et donc l'ostéo-transducteur (1) contre le front (3) du sujet (6). Le dispositif comporterait alors une partie (13) fixée à la partie principale (7) et qui est plus souple pour éviter l'effet de poinçon contre le crâne (6) en cas de choc sur le casque (2). Une membrane de séparation (12) maintiendrait un volume constant dans la cavité inférieure au niveau de (13).

Selon différents modes de réalisation du procédé selon l'invention, ce dernier, procédé d'implantation et de maintien d'un dispositif communicant d'ostéophonie (1), avec micro et/ou haut-parleur, dans un matériel dur ou souple (2), peut :
- se faire en appliquant directement le dispositif d'ostéophonie (1) grâce à une poche souple (5), placée sur ou à l'intérieur dudit matériel (2), et servant à plaquer et à maintenir, de façon confortable et au plus prêt de l'os conducteur (4), ledit dispositif d'ostéophonie (1) étant alors directement sur la peau ou le cuir chevelu (3) d'un être vivant (6) portant ledit matériel (2),
- se faire en appliquant directement le dispositif d'ostéophonie (1) de façon « flottante » par rapport à la structure rigide éventuelle dudit matériel (2), de manière à ne capturer que la voix en provenance dudit être vivant (6), et non les sons parasites en provenance de l'environnement extérieur qui pourraient être canalisés par ladite structure rigide vers ledit dispositif d'ostéophonie (1),
- se faire en utilisant la poche souple (5) pour l'ajustement idéal dudit matériel (2) à la forme et à la taille de la partie dudit être vivant (6) sur laquelle ledit matériel (2) est positionné,
- en positionnant ladite poche souple (5) de maintien dudit dispositif d'ostéophonie (1), à l'extrémité d'une pièce mécanique additionnelle (7), ladite pièce mécanique additionnelle (7) étant introduite dans ledit matériel (2) dans un trou prévu à cet effet (8), ou dans un trou obtenu après un perçage judicieux et approprié, ou enfin grâce à un moyen d'auto-perçage en vue de son positionnement, de son réglage et de son maintien dans ledit matériel (2).

Selon différents modes de réalisation d'un Dispositif selon l'invention, ce dernier, dispositif d'ostéophonie (1) avec micro et/ou haut-parleur, peut être positionné et maintenu, à l'intérieur d'un matériel (2), dur ou souple (comme à titre d'exemples non limitatifs, un casque, un bandeau, un bonnet, un serre-tête, des lunettes ou une visière), grâce à une poche souple (5), selon l'un quelconque des procédés selon l'invention décrits ci-dessus.

Selon différents modes de réalisation d'un Dispositif selon l'invention, ce dernier, dispositif souple (5), comme à titre d'exemple non limitatif une poche gonflable, peut :
- servir à plaquer et à maintenir, de façon confortable et au plus prêt de l'os conducteur (4), un dispositif d'ostéophonie (1) directement sur la peau ou le cuir chevelu (3) d'un être vivant (6) portant un matériel dur ou souple (2), selon l'un quelconque des procédés selon l'invention décrits ci-dessus,
- contenir de l'air ou un fluide ou un isolant phonique,
- être extensible et/ou gonflable,
- être rempli ou vidé par un moyen externe ou interne, pour assurer le meilleur réglage de pression et de volume entre ledit matériel (2) et la partie en contact dudit être vivant (6).

Selon différents modes de réalisation d'un Dispositif selon l'invention, ce dernier, dispositif dur ou souple (2), comme à titre d'exemples non limitatifs, un casque, un bandeau, un bonnet, un serre-tête, des lunettes ou une visière, peut contenir une poche souple (5), servant à plaquer et à maintenir, de façon confortable et au plus prêt de l'os conducteur (4), un dispositif d'ostéophonie (1) directement sur la peau ou le cuir chevelu (3) d'un être vivant (6) portant ledit dispositif (2), selon l'un quelconque des procédés selon l'invention décrits ci-dessus.

Selon différents modes de réalisation d'un Dispositif selon l'invention, ce dernier, dispositif mélanique (7), comme à titre d'exemples non limitatifs, un cylindre, un cône, une sphère ou un parallélépipède, peut :
- posséder à l'une de ces extrémités, un Dispositif souple (5) avec un dispositif d'ostéophonie (1),
- être introduit dans un matériel (2) selon l'un quelconque des procédés selon l'invention décrits ci-dessus.

Selon différents modes de réalisation d'un Dispositif selon l'invention, ce dernier, peut :
- avoir un moyen de programmation et/ou de configuration par l'extérieur avec fil ou sans fil (comme, à titre d'exemple non limitatif, par couplage capacitif),
- avoir moyen de communication avec l'extérieur, courte ou longue distance (comme un émetteur-récepteur, à titre d'exemple non limitatif), avec ou sans fil,
- être autonome et posséder un moyen de réserve d'énergie (pile ou accumulateur, à titre d'exemples non limitatifs),
- avoir sa dite réserve d'énergie rechargeable, par l'extérieur,
- avoir sa dite recharge réalisée avec ou sans fil (par couple magnétique, à titre d'exemple non limitatif).

## Revendications

1. Dispositif permettant l'application de façon confortable d'un dispositif communicant d'ostéophonie (1) avec micro et/ou haut-parleur, sur la peau ou le cuir chevelu (3) et au plus près de l'os conducteur (4) d'un être vivant (6) porteur d'un matériel dur ou souple (2), tel qu'un casque, un bandeau, un bonnet, un serre-tête, des lunettes ou une visière, **caractérisé en ce que** :
• il est constitué d'une poche souple (5) placée à l'intérieur de ou sur ledit matériel dur ou souple (2), le dispositif communicant d'ostéophonie étant fixé à l'intérieur de ou sur ladite poche souple (5).

2. Dispositif selon la revendication 1, **caractérisé en ce que**:
• la poche souple (5) contient de l'air ou un fluide ou un matériau déformable, constituant ainsi un isolant phonique de manière à ne capturer que la voix en provenance dudit être vivant (6), et non les sons parasites en provenance de l'environnement extérieur.

3. Dispositif selon l'une quelconque des revendications précédentes, **caractérisé en ce que**:
• la poche souple (5) est extensible et/ou gonflable, permettant l'ajustement idéal dudit matériel (2) à la forme et à la taille de la partie dudit être vivant (6) sur laquelle ledit matériel (2) est positionné.

4. Dispositif selon l'une quelconque des revendications précédentes, **caractérisé en ce que**:
• la poche souple (5) comprend un moyen externe ou interne permettant de la remplir ou la vider, afin d'assurer le meilleur réglage de pression et de volume entre ledit matériel (2) et la partie en contact dudit être vivant (6).

5. Dispositif selon l'une quelconque des revendications précédentes, **caractérisé en ce que**:
• il intègre un dispositif de pompe (8) actionné à partir de l'extérieur, permettant d'augmenter la pression de la cavité réalisée par la pièce mécanique et ainsi de plaquer plus fortement la paroi et donc le dispositif communicant d'ostéophonie (1) contre la peau ou le cuir chevelu (3) dudit être vivant (6).

6. Dispositif selon l'une quelconque des revendications précédentes, **caractérisé en ce que**:
• il comprend une valve (9) permettant de vider tout ou partie de l'air ou du fluide contenu dans la cavité réalisée par la pièce mécanique afin de diminuer la force de placage.

7. Dispositif selon l'une quelconque des revendications précédentes, **caractérisé en ce que**:
• la poche souple (5) est positionnée à l'extrémité d'une pièce mécanique additionnelle (7) positionnée dans un évidement pratiqué dans ledit matériel dur ou souple (2).

8. Dispositif selon la revendication précédente,
**caractérisé en ce que**:
• ladite pièce mécanique additionnelle comporte un pas de vis (11) lui permettant une translation hélicoïdale dans l'épaisseur dudit matériel dur ou souple (2).

## Claims

1. Device permitting an audiologic instrument (1) with microphone and/or loudspeaker (1) to be worn comfortably on the skin or scalp (3) of a human being (6), close to bone conductor (4) consisting of rigid or flexible equipment (2), such as a headset, a strip, a head band, spectacles or visor, **characterised in that**:
. it consists of a flexible bag (5) placed inside or on said hard or soft equipment (2), the audiologic instrument being fixed inside or on the said flexible bag (5),

2. Device according to claim 1, **characterised in that**:
. flexible bag (5) contains air or a fluid or a deformable material, thereby creating a sound insulator so that only the voice of said human being (6) is detected and not interfering sounds from the eternal environment.

3. Device according to any one of the above claims, **characterised in that**:
. flexible bag (5) is expandable and/or inflatable, enabling said equipment (2) to adjust ideally to the shape and size of the part of said human being (6) on which the said equipment (2) is positioned.

4. Device according to any one of the above claims, **characterised in that**:
. flexible bag (5) includes external and internal means enabling it to be filled or emptied in order to ensure the best adjustment of the pressure and the volume between said equipment (2) and the part in contact with said human being (6).

5. Device according to any one of the above claims, **characterised in that**:
. it incorporates a pumping device (8) actuated from the outside for increasing the pressure of the cavity created by the mechanical part and thereby causing it to press more strongly the wall and therefore audiologic device (1) against the skin or scalp (3) of the said human being (6).

6. Device according to any one of the above claims, **characterised in that**:
. it includes a valve (9) enabling all or part of the air or the fluid contained in the cavity created by the mechanical part to be released and thereby diminish the force of application.

7. Device according to any one of the above claims, **characterised in that**:
. flexible bag (5) positioned at the end of an additional mechanical part (7) positioned in a void created in said hard or soft equipment (2).

8. Device according to the previous claim, **characterised in that**:
. said additional mechanical part has a screw pitch (11) enable it to translate helicoidally within the thickness of the said hard or soft equipment (2).

## Patentansprüche

1. Vorrichtung zum angenehmen Anlegen einer Knochenleitungs-Kommunikationsvorrichtung (1) mit Mikrofon und/oder mit Lautsprecher auf der Haut oder dem Kopfhaar (3), möglichst nahe des leitenden Knochens (4) eines Lebewesens (6), das Träger eines Gegenstandes aus hartem oder weichem Material (2), wie zum Beispiel einem Helm oder Kopfgeschirr, einem Band, einer Kappe, einem Haarreif, einer Brille oder einem Sonnenschutz ist, **gekennzeichnet dadurch dass**
• es aus einer flexiblen Tasche (5) besteht, die in oder auf dem Gegenstand aus hartem oder weichem Material (2) angeordnet ist, wobei die Knochenleitungs-Kommunikationsvorrichtung in oder auf der flexiblen Tasche (5) befestigt ist.

2. Vorrichtung gemäß Anspruch 1, **gekennzeichnet dadurch, dass**
• die flexible Tasche (5) Luft oder ein Fluid oder ein verformbares Material enthält, das dadurch als Schalldampfer wirkt, so dass nur die Stimme des Lebewesens (6), jedoch nicht Störgeräusche aus der externen Umgebung empfangen werden

3. Vorrichtung gemäß einem der vorstehenden Patentansprüche, **gekennzeichnet dadurch, dass**
• die flexible Tasche (5) dehnbar und/oder aufblasbar ist, so dass die optimale Anpassung des Materials (2) an die Form und Größe des Bereichs des Lebewesens (6), auf dem das Material (2) positioniert wird, erzielt werden kann.

4. Vorrichtung gemaß einem der vorstehenden Patentansprüche, **gekennzeichnet dadurch, dass**
• die flexible Tasche (5) ein externes oder internes Mittel besitzt, mit dem sie gefüllt oder geleert werden kann, so dass der Druck und das Volumen zwischen dem Material (2) und dem mit ihm in Kontakt stehenden Bereich des Lebewesens (6) bestmöglich eingestellt werden können

5. Vorrichtung gemäß einem der vorstehenden Patentansprüche, **gekennzeichnet dadurch, dass**
• sie eine Pumpvorrichtung (8) besitzt, die von außen betätigt werden kann, um den Druck in dem von dem mechanischen Teil gebildeten Hohlraum zu erhöhen und die Wand, und damit auch die Knochenleitungs.
• Kommunikationsvorrichtung (1) starker an die Haut oder die Kopfhaut (3) des Lebewesens (6) anzudrücken.

6. Vorrichtung gemäß einem der vorstehenden Patentansprüche, **gekennzeichnet dadurch, dass**
sie ein Ventil (9) besitzt, mit dem die Luft oder das Fluid, die in dem von dem mechanischen Teil gebildeten Hohlraum enthalten sind, ganz oder teilweise abgelassen werden können, um den Anpressdruck zu verringern.

7. Vorrichtung gemäß einem der vorstehenden Patentansprüche, **gekennzeichnet dadurch, dass**
• die flexible Tasche (5) am Ende eines zusätzlich vorhandenen mechanischen Teils (7) angeordnet ist, das sich seinerseits in einer Ausnehmung In dem Gegenstand aus hartem oder weichen Material (2) befindet

8. Vorrichtung gemäß dem vorstehenden Anspruch, **gekennzeichnet dadurch,**
• **dass** das zusätzlich vorhandene mechanische Teil ein Gewinde (11) besitzt, das ihm die Möglichkeit zur schraubenförmigen Bewegung in Richtung Dicke des Gegenstandes aus hartem oder weichem Material (2) bietet.
